(19) Europäisches Patentamt
European Patent Office
Office européen des brevets

(11) **EP 2 581 764 A1**

(12) **EUROPEAN PATENT APPLICATION**

(43) Date of publication:
**17.04.2013 Bulletin 2013/16**

(51) Int Cl.:
**G01V 1/28** (2006.01)

(21) Application number: **12187734.4**

(22) Date of filing: **09.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.10.2011 FR 1159117**

(71) Applicant: **CGGVeritas Services S.A.**
**91300 Massy (FR)**

(72) Inventor: **De Cacqueray, Benoît**
**91300 Massy (FR)**

(74) Representative: **Regimbeau**
**20, rue de Chazelles**
**75847 Paris Cedex 17 (FR)**

(54) **Apparatus and method for identification of source mechanism**

(57) Computing device, software and method for identifying a source mechanism associated with a microseismic event taking place in a subsurface of the earth. The method includes receiving (1700) traces associated with a plurality of receivers located in a grid above the subsurface; dividing (1702) the grid in a set of sub-blocks, each sub-block including one or more receivers of the plurality of receivers; determining (1704), for each sub-block, a corresponding summation element based on traces associated with the corresponding sub-block; identifying (1706) a predetermined number of patterns that are associated with plural source mechanisms; multiplying each summation element by a polarization coefficient according to a corresponding pattern; calculating (1708) in the computing device, for each pattern, a semblance function based on summation elements of the sub-blocks; and identifying (1710) the source mechanism of the microseismic event based on the semblance function. A pattern includes a first subset of the sub-blocks having positive polarity and a second subset of the sub-blocks having negative polarity, and the first subset together with the second subset form the entire set of the sub-blocks.

## Figure 14b

**Description**

**BACKGROUND**

**TECHNICAL FIELD**

Embodiments of the subject matter disclosed herein generally relate to methods and systems and, more particularly, to mechanisms and techniques for identifying a source mechanism associated with an underground microseismic event.

**DISCUSSION OF THE BACKGROUND**

Stimulated fracturing operations are intended to increase the productivity of a hydrocarbon reservoir working well. These operations include injecting a high-pressure fluid into a layer of the subsoil where the reservoir is located. The injection of the fluid produces micro-fractures in the layer. This technique makes it possible to increase the permeability of the reservoir by favoring hydrocarbon circulation via the micro-fractures to the well.

The micro-fractures of the layers are one possible source of microseismic events. Other microseismic events exist and need to be monitored for various reasons, e.g., management of a well. Such microseismic events may include the seismic effects generated in a formation not only by fracturing but also by depletion, flooding, treatment, fault movement, collapse, water breakthrough, compaction or other similar subterranean interventions or effects.

To determine these microseismic events, geologists or geophysicists conventionally record at the surface of the earth waves generated by these events. The waves are recorded as a function of time by one or more receivers.

The seismic sensors are deployed in the vicinity of the reservoir. The conventional way of determining the microseismic events in the explored area is to deploy a few sensors inside the observation well(s) and to monitor the fracturing events. Another way is to deploy seismic sensors at or close to the earth's surface.

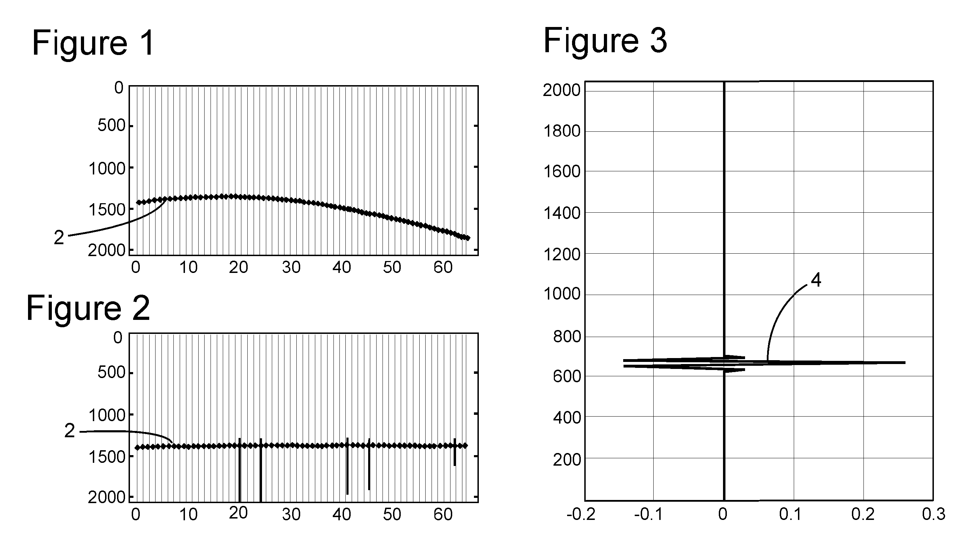

However, the known methods do not enable rapid data processing, and are not suitable for real-time subsoil monitoring as discussed next. One known method applies a semblance algorithm to data recorded by a surface receiver array. This algorithm tests all the possible positions of the source within a given volume in the subsurface. For each possible position of the source, the algorithm computes corresponding propagation delays of the direct waves between the source position under investigation and each receiver of the array. Then, the raw data that would be recorded by the array (see Figure 1) is time-delayed based on the calculated propagation delay of each receiver. Figure 1 shows, for a synthetic example, recorded traces 2 at various times (Y axis) along various positions (X axis). The result of this process is shown in Figure 2, in which the traces 2 are aligned on a straight line. Thus, a summation of these traces is constructive and determines a peak 4 as shown in Figure 3.

It is noted that the straight alignment of the traces 2 in Figure 2 happens only when the selected position for the source corresponds to the actual position of the source. For other cases, i.e., the selected position does not correspond to the actual position of the source, a different trace distribution is obtained.

A semblance function is used for calculating which of the selected positions corresponds to the actual position of the source. Considering that $r_j$ is a sample of the $j^{th}$ trace at a given time and corrected for a given source position, a nominator factor Semb_Nom of the semblance function is defined by:

$$Semb\_Nom = \sum_{j=1}^{Nr} r_j \quad ,$$

with Nr being the total number of traces recorded by the receiver array. A denominator factor of the semblance function is considered to be:

$$Semb\_Denom = \sum_{j=1}^{Nr} r_j^2 \quad ,$$

and the semblance function is defined as the ratio of the square of the nominator factor and the denominator factor:

$$Semb = \frac{Semb\_Nom^2}{Semb\_Denom}$$

.

The semblance function is calculated repeatedly for various selected positions of the source, and the higher value of this function indicates the real source position. However, this technique has its own limitations.

For example, this technique faces a physical phenomenon called "source mechanism". The source mechanism (or focal mechanism) of a seismic event describes the inelastic deformation in the source region that generates the seismic waves. Source mechanisms are derived from a solution of the moment tensor for the seismic event, which itself is estimated by an analysis of the observed seismic waveforms. Depending on the source mechanism, the ground displacements measured by the receivers may be only positive (if an explosion occurred in the subsurface), or both positive and negative (for an earthquake), or may have other distributions.

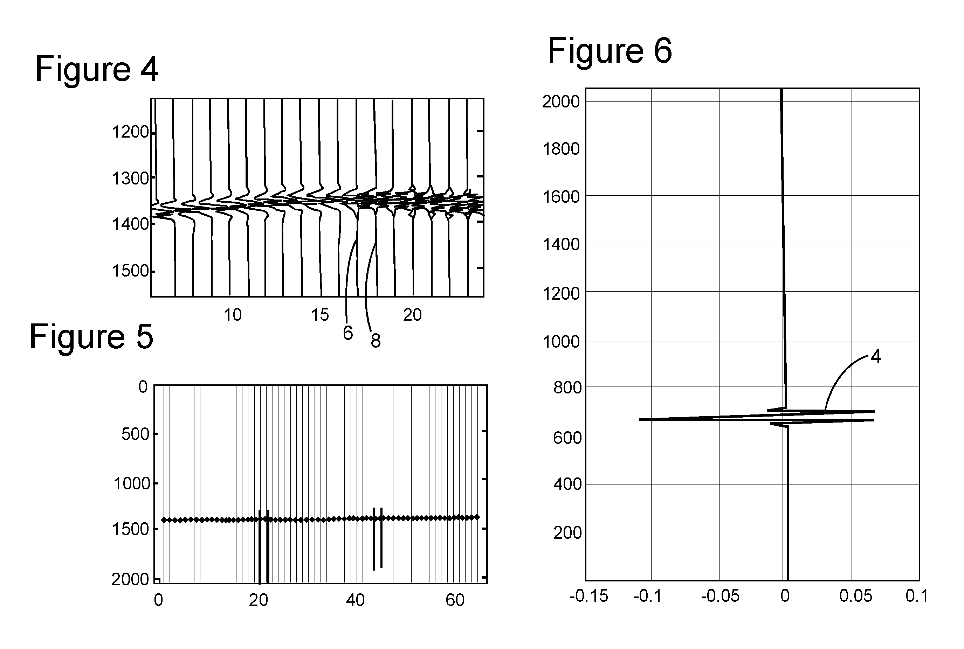

In other words, waves produced by the seismic source may have, in two different directions, different polarizations. For example, the polarization of the wavelets may be inverted as illustrated in Figure 4. Figure 4 shows a polarization change between trace 6 at position 17 along X axis and trace 8 at position 18 along the X axis. In this case, the summation involved by the semblance function includes wavelets characterized by positive and negative polarizations. Thus, after delaying the traces as shown in Figure 5, the summation is partially destructive so that peak amplitude decreases as shown in Figure 6. More specifically, the peak 4 decreases from about 0.27 (see Figure 3) to 0.12 (see Figure 6). For this example, the reduction of the peak 4 represents an energy loss of more than 7dB, which is large for microseismic events.

Such a loss becomes more pronounced for a real case that is affected by noise as shown in Figure 7. Figure 7 shows the traces 2 affected by noise 9. After correcting for the time delay as shown in Figure 8, a peak is determined in Figure 9 to be not well defined. In other words, the so-called peak is difficult to determine because it does not have a well-defined shape. The worst case occurs when the polarization is such that there are a same number of traces affected by the negative polarization as the number of traces affected by the positive polarization. In this case, the theoretical peak value after summation is substantially zero. In one application, each event signal is weighted by a coefficient linked with the source mechanism shape.

This phenomenon and the resulting wavelet-sign inversion is an unresolved problem in the source detection field. Various techniques have been developed to resolve this problem. In some solutions, the semblance algorithm is modified so that only the absolute value of the samples is considered. This solution avoids summing wavelets with opposite signs. However, because the noise-only samples are always positive, the noise level is increased, which is undesirable. The Signal-to-Noise Ratio (SNR) of a receiver of the receiver array (i.e., peak energy compared to noise energy) substantially decreases in this solution.

In an improved technique, one can consider that the polarization has local coherency. Thus, the traces are distributed in N local sub-blocks where the polarization is roughly constant. The sum within each sub-block becomes globally constructive. Then, the final result is computed using the sum of the absolute value of all the sub-blocks. In this case, the noise level is still high as N positive values of noise are summed, but it is less important compared to the preceding solution. This improved solution fails for the case of very noisy records and creates an SNR loss of 3dB (for a 2-dimensional array) or 6dB (for a 3-dimensional array).

Another solution is to compute the semblance for each possible position of the sign inversions. This will lead to an accurate final result, but the semblance calculation requires a costly algorithm. For example, in reservoir monitoring, the receiver array size is large and the number of traces is high (several thousand). Thus, the computational cost becomes prohibitive.

Accordingly, it would be desirable to provide systems and methods that avoid the aforedescribed problems and drawbacks.

## SUMMARY

According to one exemplary embodiment, there is a method for identifying a source mechanism associated with a microseismic event taking place in a subsurface of the earth. The method includes a step of receiving traces associated with a plurality of receivers located in a grid above or below the subsurface; a step of dividing the grid into a set of sub-blocks, each sub-block including one or more receivers of the plurality of receivers; a step of determining, for each sub-block, a corresponding summation element based on traces associated with the corresponding sub-block; a step of identifying a predetermined number of patterns that are associated with plural source mechanisms; a step of calculating in the computing device, for each pattern, a pattern-dedicated semblance function based on summation elements of the sub-blocks; and a step of identifying the source mechanism of the microseismic event based on the semblance function. A pattern includes a first subset of the sub-blocks having positive polarity and a second subset of the sub-blocks having negative polarity, and the first subset together with the second subset form the entire set of sub-blocks.

According to another exemplary method, there is a method implemented in a computing device for identifying a source mechanism associated with a microseismic event taking place in a subsurface of the earth. The method includes a step of receiving traces associated with a plurality of receivers located on a grid above the subsurface; a step of dividing the grid in a set of sub-blocks, each sub-block including one or more receivers of the plurality of receivers; a step of determining, for each sub-block, a corresponding summation element based on traces associated with the corresponding sub-block; a step of identifying a predetermined number of patterns that are associated with plural source mechanisms; a step of multiplying each summation element by a polarization coefficient according to a corresponding pattern; a step of calculating in the computing device, for each pattern, a semblance function based on summation elements of the sub-blocks; and a step of identifying the source mechanism of the microseismic event based on the semblance function. A pattern includes a first subset of the sub-blocks having positive polarity and a second subset of the sub-blocks having negative polarity, and the first subset together with the second subset form the entire set of the sub-blocks.

According to still another exemplary embodiment, there is a computing device configured to identify a source mechanism associated with a microseismic event taking place in a subsurface of the earth. The computing device includes a processor configured to, receive traces associated with a plurality of receivers located on a grid above the subsurface; divide the grid in a set of sub-blocks, each sub-block including one or more receivers of the plurality of receivers; determine, for each sub-block, a corresponding summation element based on traces associated with the corresponding sub-block; receive a predetermined number of patterns that are associated with plural source mechanisms; multiply each summation element by a polarization coefficient according to a corresponding pattern; calculate for each pattern a semblance function based on summation elements of the sub-blocks; and identify the source mechanism of the microseismic event based on the semblance function. A pattern includes a first subset of the sub-blocks having positive polarity and a second subset of the sub-blocks having negative polarity, and the first subset together with the second subset form the entire set of the sub-blocks.

## BRIEF DESCRIPTION OF THE DRAWINGS

The accompanying drawings, which are incorporated in and constitute a part of the specification, illustrate one or more embodiments and, together with the description, explain these embodiments. In the drawings:

Figure 1 is a graph illustrating seismic raw data collected from plural receivers located on the earth surface;

Figure 2 is a graph illustrating time-corrected seismic data corresponding to Figure 1;

Figure 3 is a graph illustrating a trace associated with a seismic event after summation;

Figure 4 is a graph illustrating seismic raw data with polarity changes collected from plural receivers located on the earth surface;

Figure 5 is a graph illustrating time-corrected seismic data corresponding to Figure 4;

Figure 6 is a graph illustrating a trace associated with a seismic event when there is a polarity change;

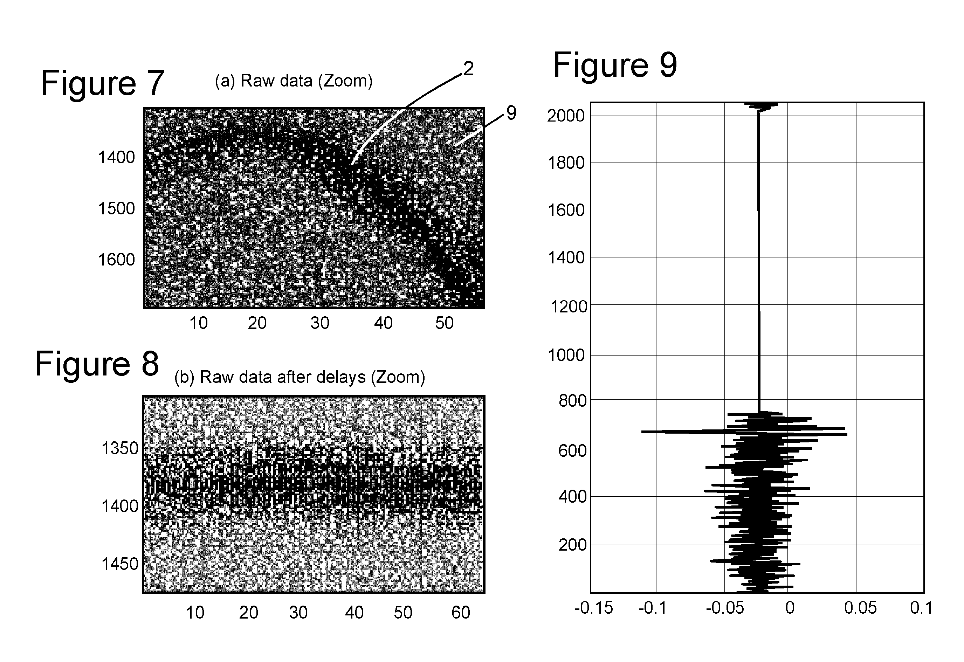

Figure 7 is a graph illustrating seismic raw data having a high level of noise;

Figure 8 is a graph illustrating time-corrected seismic data of Figure 7;

Figure 9 is a graph illustrating a trace associated with a seismic event illustrated in Figure 7;

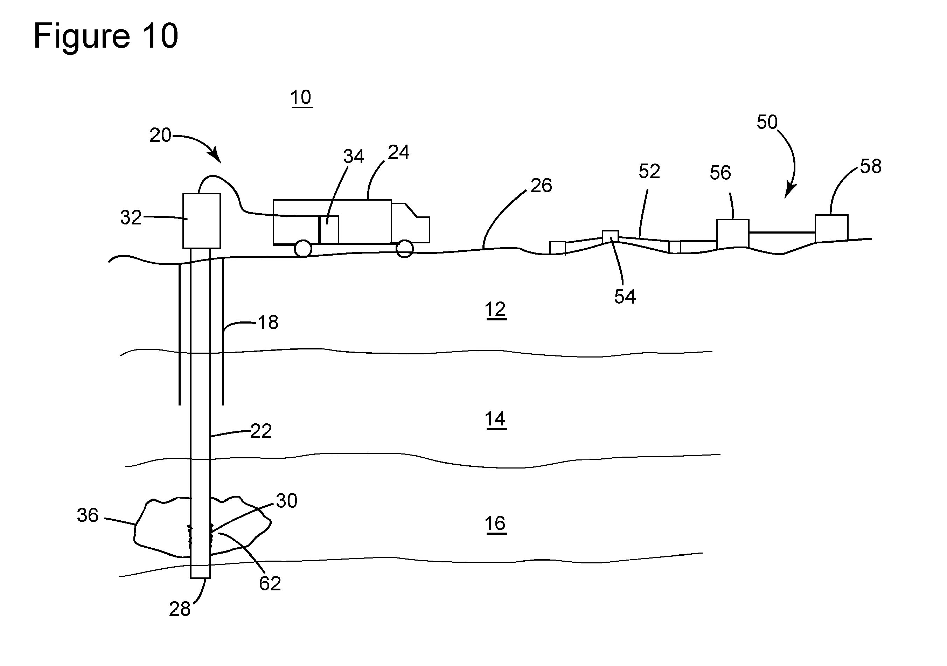

Figure 10 is a schematic diagram of a system for recording seismic raw data associated with a seismic event according to an exemplary embodiment;

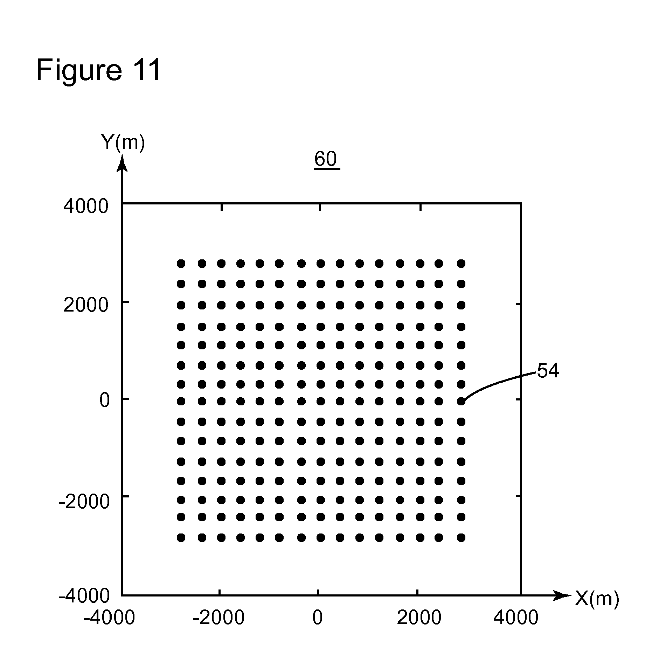

Figure 11 is a schematic diagram of plural receivers located on the surface of the earth for recording a seismic event;

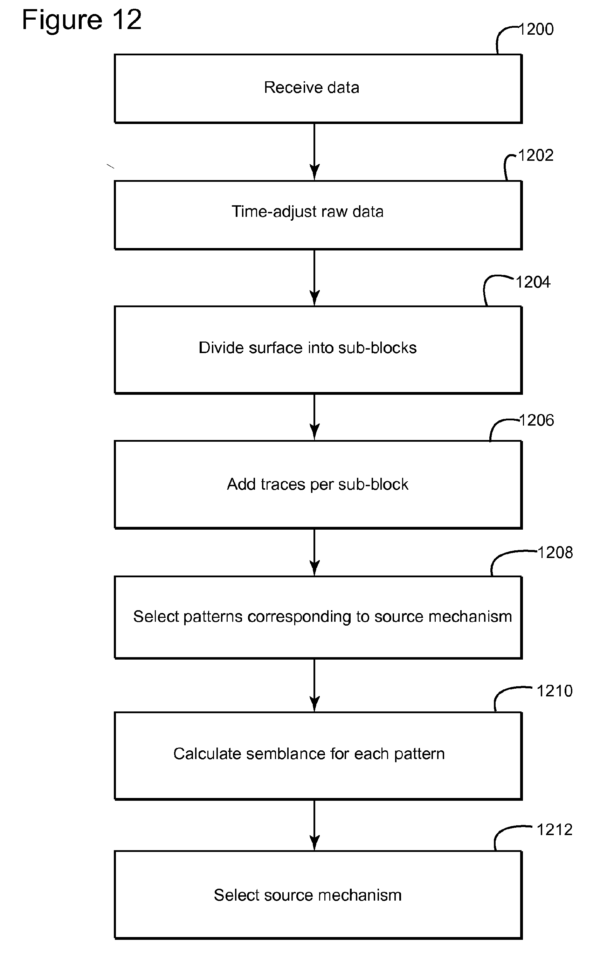

Figure 12 is a flowchart of a method for determining a source mechanism associated with a seismic event according to an exemplary embodiment;

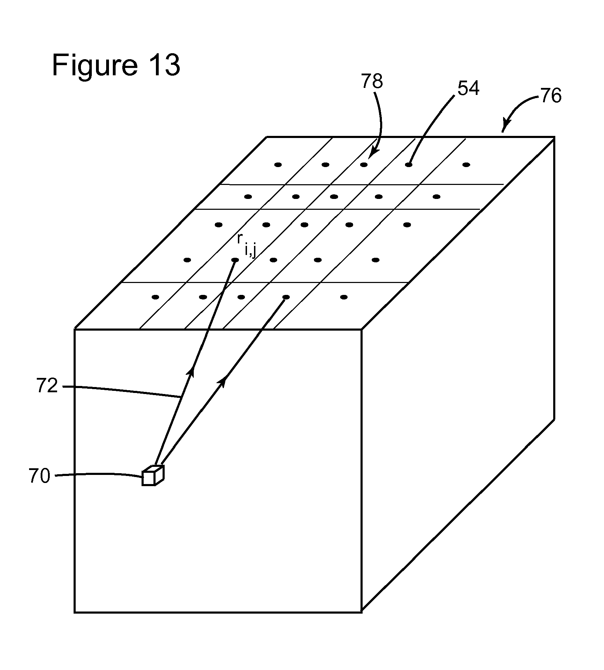

Figure 13 is a schematic diagram showing the locations of a seismic event and the receivers according to an exemplary embodiment;

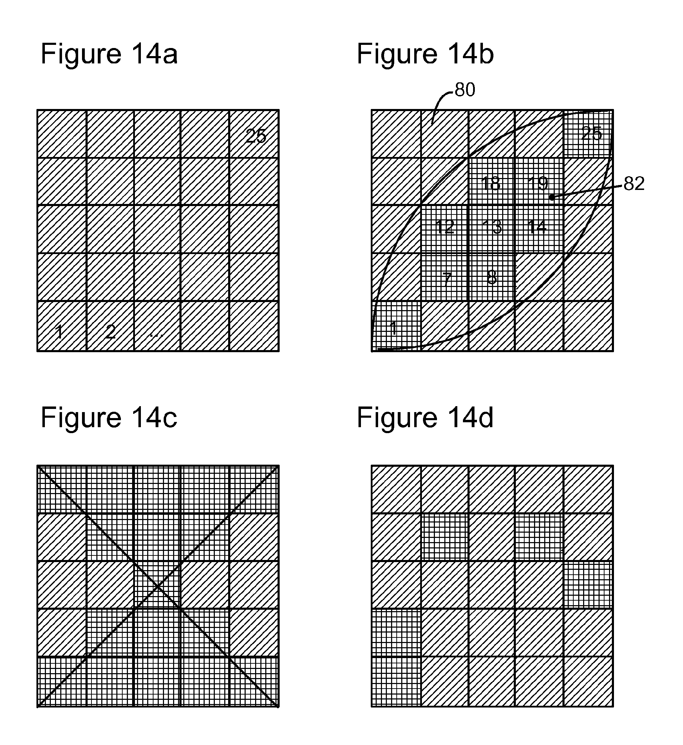

Figures 14a-c are schematic diagrams of patterns associated with various source mechanisms according to an exemplary embodiment;

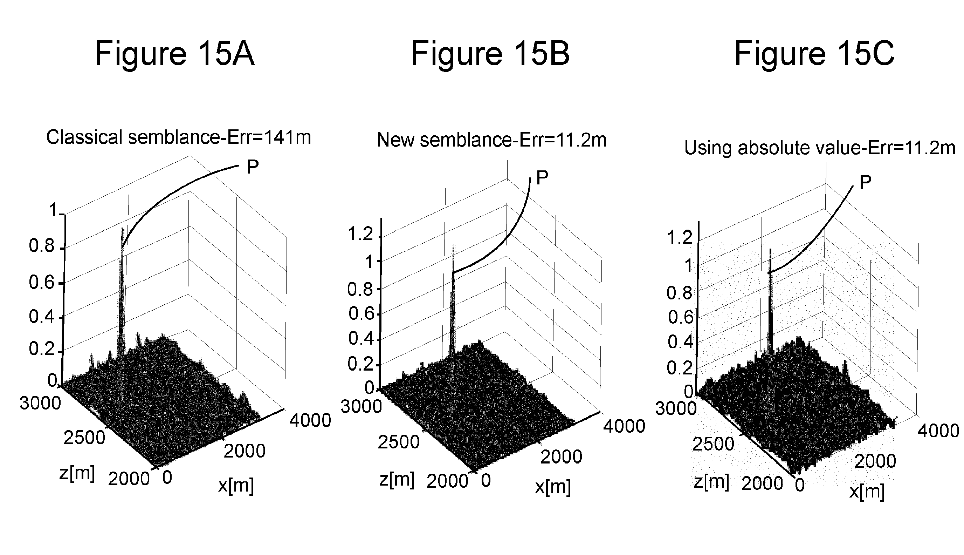

Figures 15a-c are graphs showing peaks calculated in the presence of low noise to determine a source mechanism of a microseismic event;

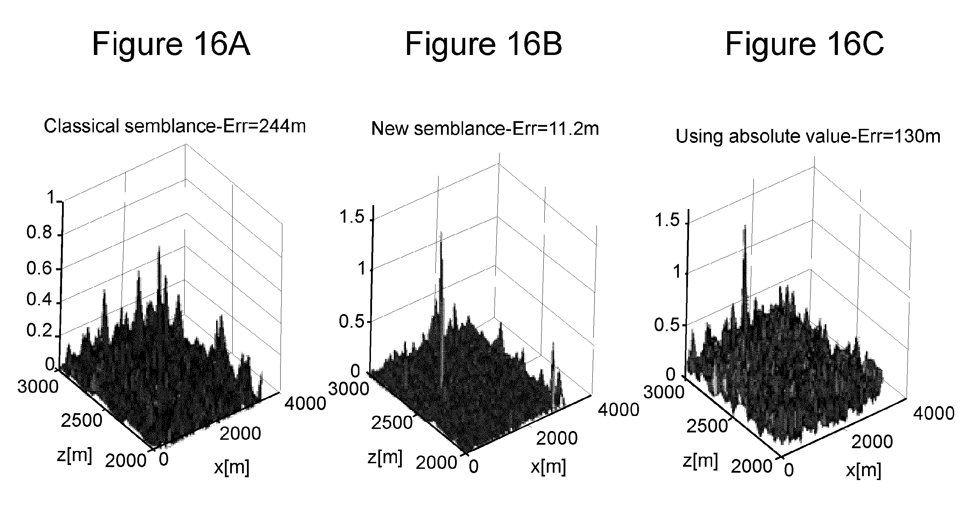

Figures 16a-c are graphs showing peaks calculated in the presence of high noise to determine a source mechanism of a microseismic event;

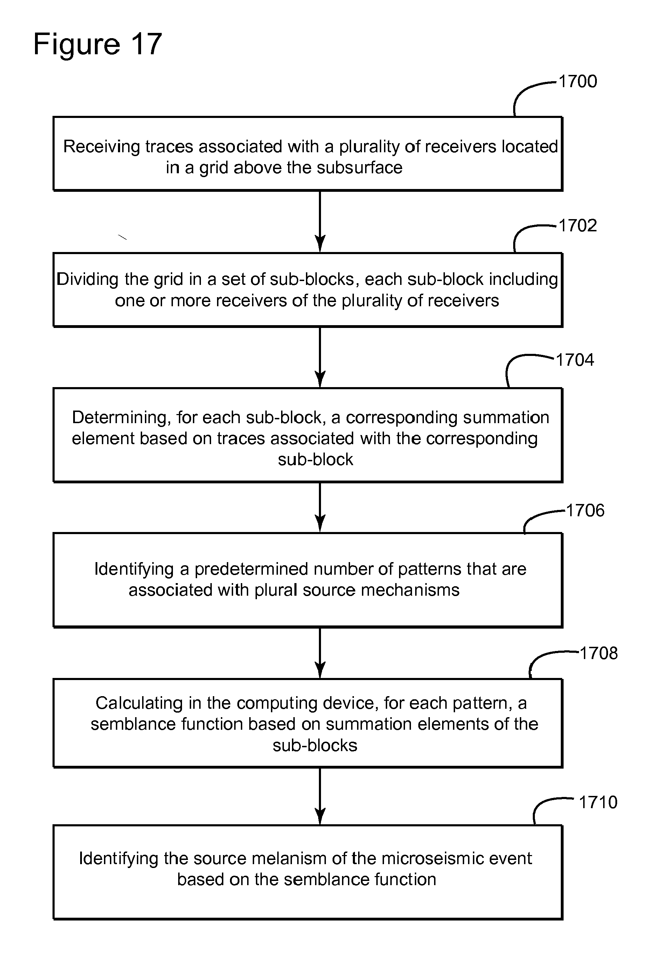

Figure 17 is a flowchart of a method for calculating a source mechanism of a microseismic event according to an exemplary embodiment; and

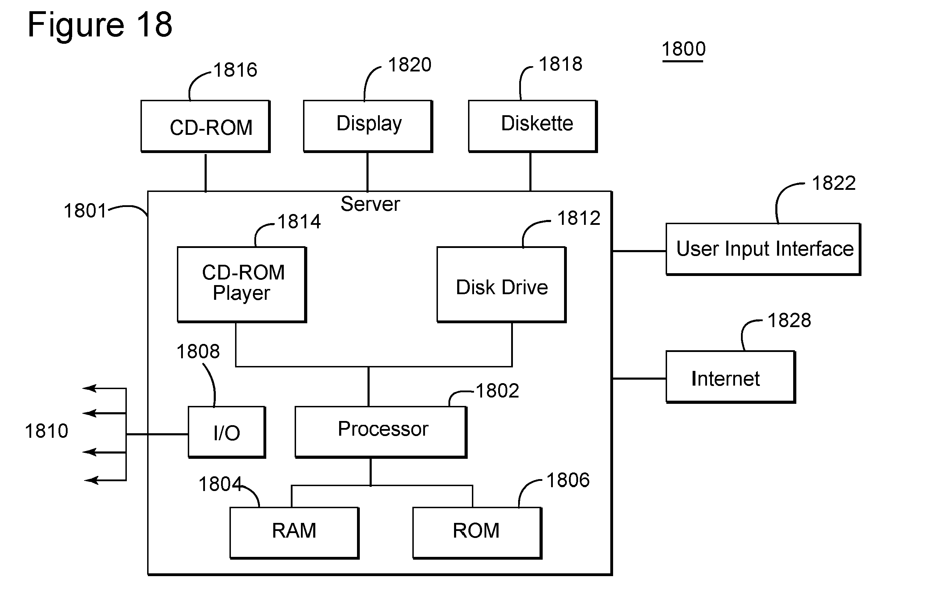

Figure 18 is a schematic diagram of a computing device capable to run the method shown in Figure 17.

## DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to microseismic events generated underground. However, the embodiments to be discussed next are not limited to such events, but may be applied to other sources of seismic events.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

According to an exemplary embodiment, there is a method that locates microseismic events observed in a subsurface of the earth. The method divides a surface area on which the receivers are located into sub-blocks. For each possible source location, the method applies travel-time delays according to a sub-surface velocity model. Then, it sums delayed traces associated with each block. Sub-blocks of the surface area are associated with wave polarization patterns. Each pattern is associated with one or more source mechanisms. A semblance function is calculated by adding together the sums for each sub-block. Thus, different wave polarization patterns may be tested at a marginal computation cost. The pattern generating the highest peak is selected and indicates the correct source mechanism.

It is noted that the method determines the source mechanism at the detection level of the event while the existing methods first detect the location of the event and then determine the source mechanism. This novel solution can detect and determine the source mechanism even for weak events which are missed by the existing methods due to SNR degradation. Thus, this novel method works in noisy environments and marginally increases the computation cost of the semblance algorithm. The novel method may provide a gain of several dB as discussed next.

Prior to discussing the details of the novel algorithm, a short overview of the hardware involved in such source mechanism identification is believed to be in order. A system 10 for recording and/or determining the positions of the microseismic events is illustrated in Figure 10. The system 10 is deployed above a subsurface zone of interest that includes geological layers 12, 14 and 16. Layer 16 is a layer containing hydrocarbons. A well 18 may be drilled through the geological layers to the layer 16. The system 10 includes a fracturing device 20 and a monitoring device 50. The fracturing device 20 includes a fluid injection column 22 extending into the well 18 and a pumping unit 24 positioned on the surface 26 of the subsurface zone. The injection column 22 includes a lower end 28 provided with openings 30 and an upper end 32 connected to the pumping unit 24.

The pumping unit 24 includes a pump 34 configured to inject a high-pressure fracturing fluid 36 into the layer 16 via the injection column 22. The fracturing fluid typically consists of a mixture of a liquid (for example, water) and particles (for example, sand).

The fracturing fluid is discharged from the column 22 via openings 30 created by well casing perforations. The fracturing fluid enters the subsurface layer 16, inducing fracturing of the layer 16, i.e., the appearance of cracks inside the layer 16. The particles contained in the fracturing fluid are forced into the cracks and remain in place in the cracks when the fluid pressure is released, thus forming a permeable network enabling hydrocarbon to flow in the layer 16 to the well 18.

The monitoring device 50 may be separately located from the fracturing device 24 or on the fracturing device 24. The monitoring device may include a network 52 of receivers (e.g., geophones) 54, a recording unit 56 and a processing unit 58. The receiver network 52 includes a plurality of receivers 54 arranged on the soil surface 26 or in the vicinity of this surface. The receivers 54 may be arranged on the nodes of a grid 60 as shown in Figure 11 or may be arranged in any other configuration. The processing unit 58 may be configured to implement any of the methods discussed next.

The soil movements detected by the receivers 54 are converted into signals (e.g., electric voltages) and they are transmitted to the recording unit 56 to be recorded therein. The recordings obtained represent the raw seismic data. For example, according to an exemplary embodiment, signals $r_{i,j}$ (i indicates a coordinate on the X axis and j indicates a coordinate on the Y axis) are detected by the receivers 54. The signal "r" is a function of the position of the receiver and the time t at which it is recorded.

According to an exemplary embodiment, raw data is collected in step 1200 (see Figure 12) from receivers 54, and this data is provided to the processing unit 58. In step 1202, the received data is delayed (time corrected) based on a selected source position 70. In other words, as shown in Figure 13, if the source is considered to be located at position 70, then a recorded trace $r_{i,j}$ needs to be corrected based on a corresponding time delay that corresponds to a path 72 of the pressure wave that propagates from the source's location 70 to the receiver. In another embodiment, share waves can be considered, with or instead of the pressure waves. Each recorded signal may be corrected according to the location of the source. This fact indicates that the identification of the source mechanism is performed while the location of the source is determined.

In step 1204, the surface 76 (see Figure 13) that spans the receivers 54 is divided into sub-blocks 78. It is noted that this step may be performed only once, before step 1200. For example, if a receiver array has N = 40x40 receivers, that array may be divided into 25 sub-blocks as shown in Figure 14a. In one application, the array may be divided into 20 to 30 blocks. The sub-blocks are numbered n1 to n25, and each sub-block may include 40x40/25 = 64 receivers. In another application, one sub-block may include a number of receivers different from another sub-block. For this particular case (used only to illustrate the novel concept and not intended to limit the novel embodiments), it is assumed that sub-blocks 80 with a white background (see Figures 14a-d) include receivers that are affected by a positive polarization, and the sub-blocks 82 with a gray background include receivers that are affected by a negative polarization.

Thus, it is possible to have $2^{25}$ possible patterns for the 25 sub-blocks shown in Figures 14a-d. However, the majority of the possible patterns, see for example the pattern illustrated in Figure 14d, do not correspond to any source mechanism. In practice, there are about 20 to 30 patterns associated with a specific source mechanism. Examples of such patterns are shown in Figures 14b and 14c. In one application, the total number of patterns is larger than 1,000,000 and the number of patterns (predetermined number) associated with a specific source mechanism is less than 100. In one application, there is a one-to-one correspondence between the number of source mechanisms and the number of actual patterns. In another application, plural patterns may correspond to the same source mechanism.

In step 1206, the time-corrected seismic data of the receivers from each sub-block are summed together. For example, considering sub-block n1, the sum of the traces is given by:

$$s_1 = \sum_{i=1}^{n=64} r_{1,i} \, ,$$

where $r_{1,i}$ is the trace from receiver "i" in the sub-block n1. For the sub-block nk, the sum is given by:

$$s_k = \sum_{i=1}^{n=60} r_{k,i} \, .$$

The classical semblance may be calculated by summing the traces for all sub-blocks as shown below:

$$Semb\_Nom = \sum_{j=1}^{N=1600} r_j \, .$$

This is equivalent to computing:

$$Semb\_Nom = \sum_{k=1}^{25} s_k \, .$$

For the traditional summation, 1599 summations are performed. However, for the novel method, 25 sub-blocks each having 64 traces are computed, and the 25 results are summed up together, thus, adding 24 more operations. Thus, there are 25x63 + 24 operations, which amount to 1599 total operations.

In one application, sub-blocks that are expected to bring mainly noise in the semblance computation (e.g., sub-blocks corresponding to polarity inversion) may be ignored.

More generally, in another application, each element of the semblance can be multiplied by a coefficient for enhancing the algorithm performances. The coefficient may act as a weight and may one or a noise-power based coefficient, apodisation coefficient, etc.

Having the summation elements for each sub-block, the method illustrated in Figure 12 advances to step 1208, in which various patterns are selected. The patterns may be selected, for example, based on the experience of a previously detecting source mechanism. The patterns may be stored in a storing device to be used later. In step 1210, for each pattern a corresponding semblance function is calculated as discussed next. For example, for the pattern shown in Figure 14b, a Pattern_n_Nom nominator is calculated as:

$$Pattern\_n\_Nom = -s_1 + s_2 + s_3 + s_4 + s_5 + s_6 - s_7 - s_8 + s_9 + s_{10} + s_{11} - s_{12}$$
$$- s_{13} - s_{14} + s_{15} + s_{16} + s_{17} - s_{18} - s_{19} + s_{20} + s_{21} + s_{22} + s_{23} + s_{24} - s_{25},$$

which represents the summation of all the sub-blocks. It is noted that each summation element is multiplied by a polarization coefficient (plus or minus one) according to a corresponding pattern.

It is noted that Pattern_n_Nom may be rewritten as:

$$Pattern\_n\_Nom = Semb\_Nom - 2s_1 - 2s_7 - 2s_8 - 2s_{12} - 2s_{13} - 2s_{14} - 2s_{18} - 2s_{19} - 2s_{25}$$

which represents only 18 additional summations.

Thus, by deducing a given pattern from another one, it is possible to further decrease the number of summation and, implicitly, the computational cost. As the semblance function's denominator is not affected by the polarization signs of the sub-blocks, n semblances may be calculated corresponding to the n selected patterns. The semblance for a given pattern "n" is given by:

$$Semb\_n = \frac{Pattern\_n\_Nom^2}{Semb\_Denom}.$$

Having calculated the semblance functions for the n considered patterns, the one having the maximum value is selected in step 1212 as identifying the source mechanism for the considered source position. By having fewer than 30 possible patterns, the novel method significantly reduces the computational cost for determining the source mechanism. The patterns may be predetermined by those who analyze the seismic data, for example, based on their experience. Once the patterns are predetermined, they are stored in the memory of the analysis device for later use. Further, it is noted that the steps illustrated in Figure 12 may be repeated when the location of the source is changed.

Results produced by the novel method discussed above are now compared with existing algorithms. Three algorithms for source detection are considered in the presence of a source mechanism. Synthetic data is considered for a 2-dimensional receiver array. A first algorithm uses the classical semblance, the second one is the novel mechanism discussed above, and the third one uses sub-blocks with absolute values (no patterns identified) as discussed in the Background section.

When the noise level is low, the three algorithms correctly identify the location of the source as illustrated in Figures 15a-c. It is noted that Figure 15a corresponds to the classical semblance algorithm, Figure 15b corresponds to the novel algorithm, and Figure 15c corresponds to the algorithm that assigns absolute values for each sub-block. The peak position P in each graph provides the X and Z coordinates of the source. The peak values are normalized using the classical semblance peak values. The graphs all indicate an error for the position of the source, which is below 20 m for the second and third algorithms.

However, the situation is quite different for a case in which the noise level is high, as illustrated in Figures 16a-c. For this case, both classical algorithms illustrated in Figures 16a and 16c provide plural peaks and large errors associated with the peaks. Because of the multiple peaks, these algorithms are not capable of determining the position of the source and thus, implicitly, the source mechanism. To the contrary, as shown in Figure 16b, the novel algorithm has a clear peak and its error is still below 20 m.

Thus, the above examples show that the novel algorithm is capable, even when the noise level is high, to correctly determine the location of the source and the associated source mechanism, and all these features are achieved with a marginal computational cost increase.

The above-noted novel algorithm may be implemented as a method as illustrated in Figure 17. The method illustrated in Figure 17 includes a step 1700 of receiving traces associated with a plurality of receivers located in a grid above the subsurface; a step 1702 of dividing the grid into a set of sub-blocks, each sub-block including one or more receivers of the plurality of receivers; a step 1704 of determining, for each sub-block, a corresponding summation element based on traces associated with the corresponding sub-block; a step 1706 of identifying a predetermined number of patterns that are associated with plural source mechanisms; a step 1708 of calculating in the computing device, for each pattern, a semblance function based on summation elements of the sub-blocks; and a step 1710 of identifying the source mechanism of the microseismic event based on the semblance function. A pattern includes a first subset of the sub-blocks having positive polarity and a second subset of the sub-blocks having negative polarity, and the first subset together with the second subset form the entire set of sub-blocks.

The methods discussed above may be implemented in dedicated devices (e.g., dedicated networks or computers or cloud computing networks, etc.) for being performed. A combination of software and hardware may be used to implement the above-described methods. A dedicated machine that can implement one or more of the above-discussed exemplary embodiments is now discussed with reference to Figure 18.

An exemplary computing device 1800 suitable for performing the activities described in the exemplary embodiments may include a server 1801. Such a server 1801 may include a central processor (CPU) 1802 coupled to a random access memory (RAM) 1804 and to a read-only memory (ROM) 1806. The ROM 1806 may also be other types of storage media to store programs, such as programmable ROM (PROM), erasable PROM (EPROM), etc. The processor 1802 may communicate with other internal and external components through input/output (I/O) circuitry 1808 and bussing 1810, to provide control signals and the like. The processor 1802 carries out a variety of functions as are known in the art, as dictated by software and/or firmware instructions.

The server 1801 may also include one or more data storage devices, including hard and floppy disk drives 1812, CD-ROM drives 1814, and other hardware capable of reading and/or storing information such as DVD, etc. In one embodiment, software for carrying out the above-discussed steps may be stored and distributed on a CD-ROM 1816, diskette 1818 or other form of media capable of portably storing information. These storage media may be inserted into, and read by, devices such as the CD-ROM drive 1814, the disk drive 1812, etc. The server 1801 may be coupled to a display 1820, which may be any type of known display or presentation screen, such as LCD displays, plasma display, cathode ray tubes (CRT), etc. A user input interface 1822 is provided, including one or more user interface mechanisms such as a mouse, keyboard, microphone, touch pad, touch screen, voice-recognition system, etc.

The server 1801 may be coupled to other computing devices, such as the landline and/or wireless terminals via a network. The server may be part of a larger network configuration as in a global area network (GAN) such as the Internet 1828, which allows ultimate connection to the various landline and/or mobile clients.

As also will be appreciated by one skilled in the art, the exemplary embodiments may be embodied in a wireless communication device, a computer network, as a method or in a computer program product. Accordingly, the exemplary embodiments may take the form of an entirely hardware embodiment or an embodiment combining hardware and software aspects. Further, the exemplary embodiments may take the form of a computer program product stored on a computer-readable storage medium having computer-readable instructions embodied in the medium. Any suitable computer-readable medium may be utilized, including hard disks, CD-ROMs, digital versatile discs (DVDs), optical storage devices, or magnetic storage devices such floppy disk or magnetic tape. Other non-limiting examples of computer-readable media include flash-type memories or other known memories.

The disclosed exemplary embodiments provide a computing device, software and a method for determining a source mechanism associated with a microseismic event. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A method implemented in a computing device for identifying a source mechanism associated with a microseismic event taking place in a subsurface of the earth, the method comprising:

receiving (1700) traces associated with a plurality of receivers located on a grid above the subsurface;

dividing (1702) the grid in a set of sub-blocks, each sub-block including one or more receivers of the plurality of receivers;

determining (1704), for each sub-block, a corresponding summation element based on traces associated with the corresponding sub-block;

identifying (1706) a predetermined number of patterns that are associated with plural source mechanisms;

multiplying each summation element by a polarization coefficient according to a corresponding pattern;

calculating (1708) in the computing device, for each pattern, a semblance function based on summation elements of the sub-blocks; and

identifying (1710) the source mechanism of the microseismic event based on the semblance function,

wherein a pattern includes a first subset of the sub-blocks having positive polarity and a second subset of the sub-blocks having negative polarity, and the first subset together with the second subset form the entire set of the sub-blocks.

2. The method of Claim 1, wherein the predetermined number of patterns is smaller than 100.

3. The method of Claim 2, wherein a total number of possible patterns is larger than a 1,000,000.

4. The method of Claim 1, wherein the step of receiving traces comprises:

receiving seismic raw data from the receivers;

correcting, for each source position, a travel-time corresponding to a source-receiver path, according to a given sub-surface velocity model to obtain seismic corrected data; and

adding together the seismic corrected data to obtain the traces.

5. The method of Claim 4, further comprising:

adding together corresponding traces for each sub-block to form the corresponding summation element for each sub-block.

6. The method of Claim 1, wherein the set of sub-blocks includes between 20 and 30 sub-blocks.

7. The method of Claim 1, wherein there is a one-to-one correspondence between the predetermined number of patterns and the source mechanisms.

8. The method of Claim 1, wherein the step of identifying the source mechanism comprises:

comparing results of the semblance function for the predetermined number of patterns; and

selecting the pattern having the highest value for the semblance function as the pattern that corresponds to the source mechanism.

9. The method of Claim 1, wherein the step of receiving traces comprises:

considering a given location of the microseismic event; and

selecting only those traces associated with the given location.

10. A computing device (1800) configured to identify a source mechanism associated with a microseismic event taking place in a subsurface of the earth, the computing device (1800) comprising:

an interface (1810) configured to receive traces associated with a plurality of receivers located on a grid above the subsurface; and

a processor (1802) connected to the interface (1810) and configured to,

divide the grid in a set of sub-blocks, each sub-block including one or more receivers of the plurality of receivers;

determine, for each sub-block, a corresponding summation element based on traces associated with the corresponding sub-block;

receive a predetermined number of patterns that are associated with plural source mechanisms;

multiply each summation element by a polarization coefficient according to a corresponding pattern;

calculate for each pattern a semblance function based on summation elements of the sub-blocks; and

identify the source mechanism of the microseismic event based on the semblance function, wherein a pattern includes a first subset of the sub-blocks having positive polarity and a second subset of the sub-blocks having negative polarity, and the first subset together with the second subset form the entire set of the sub-blocks.

11. The computing device of Claim 10, wherein the predetermined number of patterns is smaller than 100.

12. The computing device of Claim 11, wherein a total number of possible patterns is larger than a 1,000,000.

13. The computing device of Claim 10, wherein the processor is further configured to:

receive seismic raw data from the receivers;
correcting, for each source position, a travel-time corresponding to a source-receiver path, according to a given sub-surface velocity model to obtain seismic corrected data; and
add together the seismic corrected data to obtain the traces.

14. The computing device of Claim 13, wherein the processor is further configured to:

add together corresponding traces for each sub-block to form the corresponding summation element for each sub-block.

15. A computer readable medium including computer executable instructions, wherein the instructions, when executed by a processor, implement a method for identifying a source mechanism associated with a microseismic event taking place in a subsurface of the earth, the method comprising:

receiving (1700) traces associated with a plurality of receivers located on a grid above the subsurface;
dividing (1702) the grid in a set of sub-blocks, each sub-block including one or more receivers of the plurality of receivers;
determining (1704), for each sub-block, a corresponding summation element based on traces associated with the corresponding sub-block;
identifying (1706) a predetermined number of patterns that are associated with plural source mechanisms;
multiplying each summation element by a polarization coefficient according to a corresponding pattern;
calculating (1708) in the computing device, for each pattern, a semblance function based on summation elements of the sub-blocks; and
identifying (1710) the source mechanism of the microseismic event based on the semblance function, wherein a pattern includes a first subset of the sub-blocks having positive polarity and a second subset of the sub-blocks having negative polarity, and the first subset together with the second subset form the entire set of the sub-blocks.

# Figure 1

# Figure 2

# Figure 3

EP 2 581 764 A1

# Figure 4

# Figure 5

# Figure 6

## Figure 7

(a) Raw data (Zoom)

## Figure 8

(b) Raw data after delays (Zoom)

## Figure 9

EP 2 581 764 A1

# Figure 10

EP 2 581 764 A1

# Figure 11

# Figure 12

1200

```
Receive data
```

1202

```
Time-adjust raw data
```

1204

```
Divide surface into sub-blocks
```

1206

```
Add traces per sub-block
```

1208

```
Select patterns corresponding to source mechanism
```

1210

```
Calculate semblance for each pattern
```

1212

```
Select source mechanism
```

# Figure 13

## Figure 14a

## Figure 14b

## Figure 14c

## Figure 14d

Figure 15A — Classical semblance-Err=141m

Figure 15B — New semblance-Err=11.2m

Figure 15C — Using absolute value-Err=11.2m

# Figure 16A

## Figure 16B

## Figure 16C

Classical semblance-Err=244m

New semblance-Err=11.2m

Using absolute value-Err=130m

EP 2 581 764 A1

# Figure 17

1700

Receiving traces associated with a plurality of receivers located in a grid above the subsurface

1702

Dividing the grid in a set of sub-blocks, each sub-block including one or more receivers of the plurality of receivers

1704

Determining, for each sub-block, a corresponding summation element based on traces associated with the corresponding sub-block

1706

Identifying a predetermined number of patterns that are associated with plural source mechanisms

1708

Calculating in the computing device, for each pattern, a semblance function based on summation elements of the sub-blocks

1710

Identifying the source melanism of the microseismic event based on the semblance function

# Figure 18

EP 2 581 764 A1

**EUROPEAN SEARCH REPORT**

Application Number

EP 12 18 7734

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/044131 A1 (THORNTON MICHAEL P [US] ET AL) 24 February 2011 (2011-02-24)<br>* abstract; figures 1-4 *<br>* paragraphs [0012], [0020], [0021], [0023], [0026] - [0031], [0034] *<br>----- | 1-15 | INV.<br>G01V1/28 |
| A | US 2010/302905 A1 (MEUNIER JULIEN [FR]) 2 December 2010 (2010-12-02)<br>* abstract; figures 1,6 *<br>* paragraphs [0047], [0050], [0068] - [0070] *<br>----- | 1-15 | |
| A | US 3 992 672 A (FASCHING GEORGE E) 16 November 1976 (1976-11-16)<br>* abstract *<br>* column 1, lines 17-21,55-59 *<br>* column 2, lines 39-46 *<br>* column 4, lines 33-45 *<br>----- | 1-15 | |
| A | US 7 383 133 B1 (SCOTT GARY LEE [US]) 3 June 2008 (2008-06-03)<br>* abstract; figures 4,5,8 *<br>----- | 1-15 | TECHNICAL FIELDS SEARCHED (IPC)<br><br>G01V |

The present search report has been drawn up for all claims

| Place of search | Date of completion of the search | Examiner |
|---|---|---|
| The Hague | 23 October 2012 | de Jong, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**EP 2 581 764 A1**

ANNEX TO THE EUROPEAN SEARCH REPORT
ON EUROPEAN PATENT APPLICATION NO.

EP 12 18 7734

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2012

| Patent document cited in search report | | Publication date | Patent family member(s) | | Publication date |
|---|---|---|---|---|---|
| US 2011044131 | A1 | 24-02-2011 | AU 2010284553 A1 | | 15-03-2012 |
| | | | CA 2770983 A1 | | 24-02-2011 |
| | | | EP 2467735 A1 | | 27-06-2012 |
| | | | US 2011044131 A1 | | 24-02-2011 |
| | | | WO 2011022198 A1 | | 24-02-2011 |
| US 2010302905 | A1 | 02-12-2010 | AU 2010251907 A1 | | 12-01-2012 |
| | | | CA 2705618 A1 | | 27-11-2010 |
| | | | CA 2763758 A1 | | 02-12-2010 |
| | | | EP 2435857 A2 | | 04-04-2012 |
| | | | FR 2946153 A1 | | 03-12-2010 |
| | | | US 2010302905 A1 | | 02-12-2010 |
| | | | US 2012069707 A1 | | 22-03-2012 |
| | | | WO 2010136523 A2 | | 02-12-2010 |
| US 3992672 | A | 16-11-1976 | NONE | | |
| US 7383133 | B1 | 03-06-2008 | EG 24924 A | | 22-12-2010 |
| | | | GB 2448581 A | | 22-10-2008 |
| | | | US 7383133 B1 | | 03-06-2008 |

EPO FORM P0459

For more details about this annex : see Official Journal of the European Patent Office, No. 12/82